# EUROPÄISCHE PATENTSCHRIFT

(11) **EP 0 981 432 B1**
(45) Veröffentlichungstag und Bekanntmachung des Hinweises auf die Patenterteilung: **04.09.2002**
(21) Anmeldenummer: 99915560.9
(22) Anmeldetag: 10.03.1999
(51) Int. Cl.: B29C 45/00, C08J 5/00, C08L 75/04, C08L 67/02, C08L 69/00, C08L 77/00

(54) **REAKTIVES MEHRKOMPONENTENSPRITZGIESSEN**
REACTION MOULDING BY INJECTING SEVERAL CONSTITUENTS
MOULAGE REACTIF PAR INJECTION DE PLUSIEURS COMPOSANTS

(30) Priorität: 11.03.1998 DE 19810312
(43) Veröffentlichungstag der Anmeldung: 01.03.2000
(73) Patentinhaber: Institut für Polymerforschung Dresden e.V., 01069 Dresden (DE)
(72) Erfinder: LEHMANN, Dieter, D-01640 Coswig (DE); HUPFER, Bernd, D-01307 Dresden (DE); REINHARDT, Gert, D-01827 Graupa (DE); SCHWEIKLE, Dietlinde, D-73430 Aalen (DE); BRÄUER, Matthias, D-01277 Dresden (DE)
(74) Vertreter: Rauschenbach, Marion, Dipl.-Ing.
(86) Internationale Anmeldenummer: EP9901543
(87) Internationale Veröffentlichungsnummer: WO99046105

(56) Entgegenhaltungen:
- EP-A- 0 542 182
- EP-A- 0 710 539
- DE-A- 4 215 609

## Beschreibung

Die Erfindung bezieht sich auf das Gebiet der Chemie und betrifft ein reaktives Mehrkomponentenspritzgießen, durch welches beispielsweise Hart-Weich-, Hart-Hart-, Hart-Weich-Hart- oder Weich-Hart-Weich-Verbindungen im Zweitakt-Verfahren, im Sandwichmoulding-Verfahren oder im Overmoulding-Verfahren hergestellt werden können. Das erfindungsgemäße Verfahren kann auch auf dem Gebiet des Zweikomponenten-Spritzpressens angewendet werden.
Derartig hergestellte Verbindungen finden beispielsweise in Wasserführungssystemen als eingespritzte Dichtungen oder bei Griffelementen zur Verbesserung der Haptik Anwendung.

Das Mehrkomponentenspritzgießen ist ein technologisch komplizierter Prozeß und erfordert einen hohen ingenieurtechnischen Standard (C. Jaroschek, Aachener Beiträge zur Kunststoffverarbeitung, Verlag der Augustinus Buchhandlung, ABK Band 22).
Das Zweikomponentenspritzgießen z.B. zur Herstellung von Hart-Weich- und Hart-Weich-Hart-Verbindungen aus verschiedenen Materialien zur Erweiterung der Gebrauchseigenschaften von Produkten ohne kostenaufwendige zusätzliche Zwischenschritte, wie Kleben oder Fügen, ist bekannt und wird zukünftig an Bedeutung gewinnen (T. Zipp, Aachener Beiträge zur Kunststoffverarbeitung, Verlag der Augustinus Buchhandlung, ABK Band 3).
Der Einsatz verschiedener Kunststofftypen für das Mehrkomponentenspritzgießen besitzt aufgrund von Verträglichkeitsproblemen zwischen den einzelnen Komponenten Grenzen. Die Verträglichkeit ist zur Zeit für die kombinierte Anwendung bei vorgegebenen Qualitätskriterien einschließlich der Dauerbelastung der Verbindung ein wichtiges Kriterium.
Probleme treten auf, wenn unverträgliche oder wenig verträgliche Kunststofftypen miteinander kombiniert werden sollen. Die Eigenschaften für diese Produkte werden dann bestimmt durch die Schwachstelle, welche die Grenzfläche des Verbundes von zwei Komponenten bildet. In dieser Region beginnt vorzugsweise die Delamination. Empirisch wurden Verträglichkeiten beim Kombinieren aufgestellt, die aufgrund fehlender genormter Prüfmethoden nicht oder nur eingeschränkt vergleichbar sind und den wachsenden Ansprüchen nur bedingt gerecht werden.

Ein zentrales Problem beim Zweikomponentenspritzgießen ist die Verbundhaftung an der Grenzfläche zwischen den Materialien.
Bei einer Vielzahl von Anwendungen in der Mehrkomponententechnik mit unterschiedlichen Materialien werden die eingesetzten Materialien über eine spezielle Werkzeugauslegung formschlüssig miteinander so verknüpft, daß sie dadurch unlösbar verbunden sind.
Für nichtmechanische Verbindungen zwischen zwei verschiedenen Kunststoffen wurde häufig die Adhäsion zur Beschreibung der Verbundhaftung herangezogen. Rein adhäsive Kräfte (Van der Waals-Kräfte) mit Bindungsenergien im Bereich von 20 bis 40 kJ/mol beschränken sich auf den Kontakt in den Grenzflächen und sind reversibel. Als alleinig wirkende Bindekraft wird die Adhäsion als nicht ausreichend für eine dauerhafte und feste Haftung eingeschätzt (Kunststoffe 84 (1994) 6, 705 - 710).

Mit der Weiterentwicklung der Modellvorstellungen wird der Haftungsmechanismus bei Mehrkomponenten-Verbindungen bevorzugt auf ein Verschweißen der Komponenten an deren Grenzflächen (Interdiffusion der Molekülketten) zurückgeführt. Dieses Verschweißen soll beim Kontakt der Schmelze des Materials 2 mit der Grenzfläche des erkalteten Materials 1 erfolgen, wenn die Schmelzetemperatur des Materials 2 beim Auftreffen auf die Grenzfläche des Materials 1 höher ist als dessen Schmelztemperatur. Schon bei geringen Diffusionstiefen sollen hohe Verbundfestigkeiten durch eine Verschlaufung der Molekülketten miteinander entstehen. Die Diffusionstiefe ist aufgrund der geringen Schmelzekontaktzeit bis zum Erstarren relativ klein. Der Interdiffusionsvorgang wird nach diesem Modell vorzugsweise durch die verfahrenstechnisch herrschenden Temperatur- und Zeitbedingungen bestimmt. Aktuelle Ergebnisse belegen, daß das Modell zur Beschreibung der Verhältnisse an der Grenzfläche zwischen zwei Materialien über Verschweißen/Interdiffusion der Polymerketten für zahlreich Anwendungsfälle nicht ausreichend ist.

Die Aufgabe der Erfindung besteht darin, beim Mehrkomponentenspritzgießen an der Grenzfläche oder in der Grenzflächenregion zwischen zwei oder mehreren Materialien eine verbesserte Haftung zu erreichen.

Die Aufgabe wird durch die in Anspruch 1 angegebene Erfindung gelöst. Weiterbildungen sind Gegenstand der Unteransprüche.

Durch die Erfindung werden zur Verbesserung der Haftfestigkeit des Verbundes zweier oder mehrerer Komponenten Materialien eingesetzt, bei denen während des Herstellungsprozesses gezielt chemische Reaktionen hervorgerufen und genutzt werden. Durch die thermische Aktivierung mindestens einer Komponente der eingesetzten Polymere in der Schmelze werden zusätzliche chemische, d.h. kovalente Bindungen, an der Grenzfläche oder in der Grenzflächenregion zwischen den Komponenten als Grundlage für die feste und dauerhafte Verbindung ausgebildet.
Dabei wird die Schmelzeenergie in der Spritzgießmaschine zur chemischen Aktivierung für mindestens eine der Materialkomponenten genutzt. Aufgrund der kurzen Zykluszeiten müssen die chemischen Reaktionen für diese Art der Schmelzemodifizierung von Kunststoffen sehr schnell verlaufen.

Ein derart chemisch modifiziertes/aktiviertes Material wird erstens auf ein höher oder nicht schmelzendes Material aufgespritzt. Ein Verschweißen oder Verschmelzen kann an der Grenzfläche nicht stattfinden, sondern es erfolgt die Ausbildung von zusätzlichen chemischen Bindungen, die zu einer erhöhten Haftfestigkeit führen.

Vorteilhaft sind Materialkombinationen, wie:
Thermoplast - Thermoplast
Thermoplast - Elastomer
Duroplast - Thermoplast
Duroplast - Elastomer

Zweitens können die Komponenten als Schmelze gemeinsam in einem Sandwich-Moulding-Verfahren gespritzt werden.

Durch Schmelzeaktivierung zusätzlicher reaktiver Gruppen (Isocyanat- und/oder Uretdiongruppen) in der Polyurethan-Komponente und Umsetzung mit aktiven Gruppen in der zweiten Komponente, bestehend aus Amino- und/oder Amidund/oder aromatischer Hydroxy- und/oder aliphatischer Hydroxy- und/oder NH-lmidund/oder OH-Oxim- und/oder Carbonsäure- und/oder Carbonsäureanhydridgruppen können in der Grenzschicht/Grenzschichtregion des Verbundes zusätzliche chemische Bindungen erzeugt werden, die zu einer wesentlich verbesserten Verbundhaftung führen.
Es hat sich als vorteilhaft erwiesen, wenn das Formteil/der Verbund bei Raumtemperatur und normaler Luftfeuchtigkeit konditioniert wird. Eine Konditionierung unter speziellen Bedingungen, erhöhte Temperatur, erhöhte Luftfeuchtigkeit und gegebenenfalls bei Zusätzen an Alkohol, Ammoniak oder Amin ist ebenfalls vorteilhaft.
Ein besonderer Vorteil des erfindungsgemäßen Verfahrens ist, daß die Materialkombinationen direkt herstellbar sind, die sonst nur in aufwendigen und kostenintensiven Arbeitsschritten realisiert werden können. So können erfindungsgemäß auf einfache Weise dauerhafte Verbindungen erreicht werden.

Im weiteren wird die Erfindung an mehreren Ausführungsbeispielen näher erläutert.

### Beispiel 1

Die Herstellung eines modifizierten TPU (thermoplastischen Polyurethans) erfolgt durch Compoundierung eines handelsüblichen TPU der Type Elastollan C 60 D in einem Doppelschneckenextruder unter Zudosierung von 5 Ma.-% MDI (Methylendiphenylendiisocyanat) mit einer Dosierwaage. Das MDI wird in das TPU homogen eingearbeitet. Der austretende Strang wird granuliert.
Dieses Produkt wird für die Folgeversuche als modifiziertes TPU eingesetzt.

Weiter wird zur Herstellung eines Zweikomponenten-Zugstabes als Formteil als erste Komponente Polyamid 6 unverstärkt (Ultramid B3K) und als andere Komponente das modifizierte TPU eingesetzt und bei Werkzeugtemperaturen von T_{WE} = 60 °C und Temperaturen der Düsen der Spritzgießmaschine von T_{Düse1} = 255 °C (erste Komponente) und T_{Düse2} = 220 °C (andere Komponente) das Formteil durch Spritzgießen hergestellt

Bei anschließender Kontrolle der Verbundfestigkeiten ergeben sich folgende Werte.

PA6 unverstärkt / TPU unmodifiziert → 8 MPa (Stand der Technik)

PA6 unverstärkt / TPU modifiziert → 24 MPa

### Beispiel 2

Zur Herstellung eines Zweikomponenten-Zugstabes als Formteil wird als erste Komponente Polyamid 6 glasfaserverstärkt (Ultramid B3EG6) und als andere Komponente das modifizierte TPU (hergestellt entsprechend Beispiel 1) eingesetzt und bei Werkzeugtemperaturen von T_{WE} = 60 °C und Temperaturen der Düsen der Spritzgießmaschine von T_{Düse1} = 260 °C (erste Komponente) und T_{Düse2} = 220 °C (andere Komponente) das Formteil durch Spritzgießen hergestellt

Bei anschließender Kontrolle der Verbundfestigkeiten ergeben sich folgende Werte.

PA6 glasfaserverstärkt / TPU unmodifiziert → 12 MPa (Stand der Technik)

PA6 glasfaserverstärkt / TPU modifiziert → 19 MPa

### Beispiel 3

Zur Herstellung eines Zweikomponenten-Zugstabes als Formteil wird als erste Komponente Polycarbonat (PC Lexan 121) und als andere Komponente das modifizierte TPU (hergestellt entsprechend Beispiel 1) eingesetzt und bei Werkzeugtemperaturen von T_{WE} = 60 °C und Temperaturen der Düsen der Spritzgießmaschine von T_{Düse1} = 290 °C (erste Komponente) und T_{Düse2} = 220 °C (andere Komponente) das Formteil durch Spritzgießen hergestellt

Bei anschließender Kontrolle der Verbundfestigkeiten ergeben sich folgende Werte.

Polycarbonat / TPU unmodifiziert → 2 MPa (Stand der Technik)

Polycarbonat / TPU modifiziert → 14,5 MPa

### Beispiel 4

Zur Herstellung eines Zweikomponenten-Zugstabes als Formteil wird als erste Komponente Polyamid 6 (Ultramid B3K) und als andere Komponente modifiziertes TPU (Elastollan1185 A 10) eingesetzt und bei Werkzeugtemperaturen von T_{WE} = 60 °C und Temperaturen der Düsen der Spritzgießmaschine von T_{Düse1} = 255 °C (erste Komponente) und T_{Düse2} = 215 °C (andere Komponente) das Formteil durch Spritzgießen hergestellt

Bei anschließender Kontrolle der Verbundfestigkeiten ergeben sich folgende Werte.

Polyamid 6 / TPU unmodifiziert → 4 MPa (Stand der Technik)

Polyamid 6 / TPU modifiziert → 12 MPa

## Patentansprüche

1. Reaktives Mehrkomponentenspritzgießen, bei dem zwei Massen über Spritzdüsen in ein Werkzeug eingebracht werden, wobei eine der Massen ein Polyamid und/oder ein Polyester und/oder ein Polycarbonat und/oder ein zweites Polyurethan und/oder eine härtbare Reaktionsmasse ist, und die andere Masse ein thermoplastisches Polyurethan und/oder ein thermoplastisches Polyurethanelastomer ist, wobei mindestens eine der beiden Massen zur Bereitstellung reaktiver Gruppen in Schmelze modifiziert eingesetzt wird.

2. Reaktives Mehrkomponentenspritzgießen nach Anspruch 1, bei dem als andere Masse ein thermoplastisches Polyurethan und/oder ein thermoplastisches Polyurethanelastomer eingesetzt wird, bei dem in der Synthese oder durch nachträgliche Modifizierung über reaktive Extrusion ein Überschuß an Isocyanatgruppen mit einem Verhältnis von Hydroxygruppen zu Isocyanatgruppen von 1 : 1,05 bis 1,50 eingestellt ist.

3. Reaktives Mehrkomponentenspritzgießen nach Anspruch 2, bei dem als andere Masse ein thermoplastisches Polyurethan und/oder ein thermoplastisches Polyurethanelastomer eingesetzt wird, bei dem ein Verhältnis von Hydroxygruppen zu Isocyanatgruppen von 1 : 1,05 bis 1,3 eingestellt ist.

4. Reaktives Mehrkomponentenspritzgießen nach Anspruch 2, bei dem als andere Masse ein thermoplastisches Polyurethan und/oder ein thermoplastisches Polyurethanelastomer eingesetzt wird, bei dem der Überschuß an Isocyanatgruppen durch reaktive Extrusion eingestellt ist.

5. Reaktives Mehrkomponentenspritzgießen nach Anspruch 2, bei dem als andere Masse ein thermoplastisches Polyurethan und/oder ein thermoplastisches Polyurethanelastomer eingesetzt wird, bei dem der Überschuß an Isocyanatgruppen durch Zugabe von Diphenylmethan-diisocyanat eingestellt ist.

6. Reaktives Mehrkomponentenspritzgießen nach Anspruch 2, bei dem als andere Masse ein thermoplastisches Polyurethan und/oder ein thermoplastisches Polyurethanelastomer eingesetzt wird, bei dem der Überschuß an Isocyanatgruppen durch Zugabe von Uretdion-diisocyanat und/oder Uretdion-urethan-oligomer oder Uretdion-urethan-polymer eingestellt ist, wobei solche Uretdione eingesetzt werden, die bei Temperaturen ≤ 250 °C, vorzugsweise ≤ 220 °C zu Isocyanatgruppen spaltbar sind.

7. Reaktives Mehrkomponentenspritzgießen nach Anspruch 1, bei dem als erste Masse ein unmodifiziertes oder modifiziertes Polyamid eingesetzt wird.

8. Reaktives Mehrkomponentenspritzgießen nach Anspruch 1, bei dem als erste Masse ein modifiziertes Polyamid mit einer erhöhten Konzentration an aliphatischen und/oder phenolischen Hydroxygruppen und/oder primären oder sekundären Aminogruppen eingesetzt wird.

9. Reaktives Mehrkomponentenspritzgießen nach Anspruch 1, bei dem als erste Masse ein unmodifiziertes oder modifiziertes Polycarbonat mit einer erhöhten Konzentration an phenolischen Hydroxygruppen eingesetzt wird.

10. Reaktives Mehrkomponentenspritzgießen nach Anspruch 1, bei dem als erste Masse eine härtbare Reaktionsmasse vom Typ der Epoxidharze, der Phenol-Formaldehyd-Harze, der Melamin-Formaldehydharze, der Harnstoff-Formaldehydharze und/oder ein Gemisch dieser Harze eingesetzt wird.

11. Reaktives Mehrkomponentenspritzgießen nach Anspruch 1, bei dem die zwei Massen über eine gemeinsame Spritzdüse in das Werkzeug eingebracht werden.

12. Reaktives Mehrkomponentenspritzgießen nach Anspruch 1, bei dem eine Konditionierungsatmosphäre mit einer erhöhten Konzentration an Feuchtigkeit eingesetzt wird, die zusätzlich alkoholische und/oder ammoniakalische und/oder aminische Bestandteile enthalten kann.

## Claims

1. Reactive multicomponent injection moulding in which two materials are introduced into a mould via injection nozzles, wherein one of the materials is a polyamide and/or a polyester and/or a polycarbonate and/or a second polyurethane and/or a curable reactive material and the other material is a thermoplastic polyurethane and/or a thermoplastic polyurethane elastomer, wherein at least one of the two materials is used in modified form to provide reactive groups in the melt.

2. Reactive multicomponent injection moulding according to Claim 1, in which a thermoplastic polyurethane and/or a thermoplastic polyurethane elastomer, in which an excess of isocyanate groups with a ratio of hydroxyl groups to isocyanate groups of 1 : 1.05 to 1.50 is set during synthesis or by subsequent modification using reactive extrusion, is used as the other material.

3. Reactive multicomponent injection moulding according to Claim 2, in which a thermoplastic polyurethane and/or a thermoplastic polyurethane elastomer in which the ratio of hydroxyl groups to isocyanate groups is set at 1 : 1.05 to 1.3 is used as the other material.

4. Reactive multicomponent injection moulding according to Claim 2, in which a thermoplastic polyurethane and/or a thermoplastic polyurethane elastomer in which the excess of isocyanate groups is set by reactive extrusion is used as the other material.

5. Reactive multicomponent injection moulding according to Claim 2, in which a thermoplastic polyurethane and/or a thermoplastic polyurethane elastomer in which the excess of isocyanate groups is set by adding diphenylmethane diisocyanate is used as the other material.

6. Reactive multicomponent injection moulding according to Claim 2, in which a thermoplastic polyurethane and/or a thermoplastic polyurethane elastomer in which the excess of isocyanate groups is set by adding uretdione diisocyanate and/or uretdione/urethane oligomers or uretdione/urethane polymers, is used as the other material, wherein those uretdiones are used which can decompose at temperatures ≤ 250 °C, preferably ≤ 220 °C, to give isocyanate groups.

7. Reactive multicomponent injection moulding according to Claim 1, in which an unmodified or modified polyamide is used as the first material.

8. Reactive multicomponent injection moulding according to Claim 1, in which a modified polyamide with an elevated concentration of aliphatic and/or phenolic hydroxyl groups and/or primary or secondary amino groups is used as the first material.

9. Reactive multicomponent injection moulding according to Claim 1, in which an unmodified or modified polycarbonate with an elevated concentration of phenolic hydroxyl groups is used as the first material.

10. Reactive multicomponent injection moulding according to Claim 1, in which a curable reactive material of the epoxide resin, phenol/formaldehyde resin, melamine/formaldehyde resin, urea/formaldehyde resin type and/or a mixture of these resins is used as the first material.

11. Reactive multicomponent injection moulding according to Claim 1, in which the two materials are introduced into the mould via a common injection nozzle.

12. Reactive multicomponent injection moulding according to Claim 1, in which a conditioning atmosphere with an elevated concentration of moisture, which may also contain alcoholic and/or ammoniacal and/or amino constituents, is used.

## Revendications

1. Coulée réactive par injection à plusieurs composants dans laquelle deux produits sont introduits par l'intermédiaire de buses d'injection dans un matériau, dont un des produits est un polyamide et/ou un polyester et/ou un polycarbonate et/ou un deuxième polyuréthane et/ou un produit de réaction durcissable, et dont l'autre produit est un polyuréthane thermoplastique et/ou un élastomère de polyuréthane thermoplastique, un des deux produits étant mis en oeuvre sous forme modifiée en vue de la mise à disposition de groupes réactifs dans le produit de fusion.

2. Coulée réactive par injection à plusieurs composants selon la revendication 1,
dans laquelle
on met en oeuvre comme autre produit un polyuréthane thermoplastique et/ou un élastomère de polyuréthane thermoplastique, en ajustant un excès en groupes isocyanates à un rapport de groupes hydroxy aux groupes isocyanate allant de 1:1,05 à 1,50 dans la synthèse ou par modification ultérieure par extrusion réactive.

3. Coulée réactive par injection à plusieurs composants selon la revendication 2,
dans laquelle
on met en oeuvre comme autre produit un polyuréthane thermoplastique et/ou un élastomère de polyuréthane thermoplastique, en ajustant un rapport des groupes hydroxy aux groupes isocyanate de 1:1.05 à 1,3.

4. Coulée réactive par injection à plusieurs composants selon la revendication 2,
dans laquelle
on met en oeuvre comme autre produit un polyuréthane thermoplastique et/ou un élastomère de polyuréthane thermoplastique, en ajustant l'excès de groupes isocyanate par extrusion reactive.

5. Coulée réactive par injection à plusieurs composants selon la revendication 2,
dans laquelle
on met en oeuvre comme autre produit un polyuréthane thermoplastique et/ou un élastomère de polyuréthane thermoplastique, en ajustant un excès en groupes isocyanate par addition de diisocyanate de diphénylméthane.

6. Coulée réactive par injection à plusieurs composants selon la revendication 2,
dans laquelle
un met en oeuvre comme autre produit un polyuréthane thermoplastique et/ou un élastomère de polyuréthane thermoplastique, en ajustant l'excès de groupes isocyanate par addition d'uretdione diisocyanate et/ou d'oligomère d'uretdione-uréthane ou de polymère d'uretdioneuréthane, pour lesquels on met en oeuvre des uretdiones qui sont clivables à des températures ≤ 250°C, de préférence ≤ 220°C en groupes isocyanates.

7. Coulée réactive par injection à plusieurs composants selon la revendication 1,
dans laquelle
on met en oeuvre comme premier produit un polyamide non modifié ou modifié.

8. Coulée réactive par injection à plusieurs composante selon la revendication 1,
dans laquelle
on met en oeuvre comme premier produit un polyamide modifié ayant une concentration accrue en groupes hydroxy alyphatiques et/ou phénoliques et/ou des groupes amine primaires ou secondaires.

9. Coulée réactive par injection à plusieurs composants selon la revendication 1,
dans laquelle
on met en oeuvre comme premier produit un polycarbonate non modifié ou modifié ayant une concentration accrue en groupes hydroxy phénoliques.

10. Coulée réactive par injection à plusieurs composants selon la revendication 1,
dans laquelle
on met en oeuvre comme premier produit un produit de réaction durcissable du type des résines epoxy, des résines phénol-formaldéhyde, des résines mélamine-formaldéhyde, des résines urée-formaldéhyde et/ou un mélange de ces résines.

11. Coulée réactive par injection à plusieurs composants selon la revendication 1,
dans laquelle
on introduit les deux produits par l'intermédiaire d'une buse d'injection commune, dans le matériau.

12. Coulée réactive par injection à plusieurs composants selon la revendication 1,
dans laquelle
on met en oeuvre une atmosphère de mise en forme ayant une concentration accrue en humidité, qui peut contenir en supplément des constituants alcooliques et/ou ammoniacaux et/ou aminés.
